# EUROPÄISCHE PATENTSCHRIFT

(11) **EP 1 331 427 B1**
(45) Veröffentlichungstag und Bekanntmachung des Hinweises auf die Patenterteilung: **04.08.2004**
(21) Anmeldenummer: 03000164.8
(22) Anmeldetag: 07.01.2003
(51) Int. Cl.: F16L 13/14

(54) **Fitting oder Armatur zur Herstellung einer Pressverbindung mit einem eingesteckten Rohrende**
Fitting or mounting for producing a press joint with an inserted tube end
Raccord ou garniture pour établir un raccordement serré avec un embout tubulaire emboité

(30) Priorität: 25.01.2002 DE 20201074 U
(43) Veröffentlichungstag der Anmeldung: 30.07.2003
(73) Patentinhaber: VIEGA GmbH & Co. KG., 57439 Attendorn (DE)
(72) Erfinder: Viegener, Walter, 57439 Attendorn (DE)
(74) Vertreter: Dantz, Jan Henning

(56) Entgegenhaltungen:
- DE-C- 10 007 914
- US-A- 4 130 302

## Beschreibung

Die vorliegende Erfindung betrifft einen Fitting oder Armatur, insbesondere zum Verbinden mit einem rohrförmigen Bauteil, mit einem sich in eine Längsrichtung erstreckenden Endabschnitt, der zum Herstellen einer Verbindung verpressbar ist und einen ringförmigen Wulst aufweist, in dem ein Dichtungsring angeordnet ist. Ein solcher Fitting bzw. eine solche Armatur wird meist zur Herstellung einer Pressverbindung eingesetzt, wobei dann in den Endabschnitt ein Rohrende eingesteckt wird, und dann der als Anschlußstutzen ausgebildete Endabschnitt mit dem Rohr mittels eines Presswerkzeuges kalt verformt wird.

Um erkennen zu können, dass eine Preßstelle einer solchen Verbindung noch nicht verpresst ist, wird in der DE 100 07 914 vorgeschlagen, an dem Wulst des Anschlussstutzens des Fittings bzw. der Armatur eine Ausbeulung vorzusehen, durch die eine gewollte Leckage bereitgestellt wird, bis eine definitive Verpressung stattgefunden hat. Eine solche Ausbeulung für eine gewollte Leckage im unverpressten Zustand hat sich an sich bewährt, da noch bei der Montage leicht erkennbar ist, ob das Verpressen versehentlich vergessen wurde. Es muss allerdings gewährleistet sein, dass unabhängig davon, wie das Presswerkzeug an dem Endabschnitt angesetzt wird, eine dichte Pressverbindung bereitgestellt wird.

Es ist daher Aufgabe der vorliegenden Erfindung, ein Fitting oder eine Armatur der eingangs genannten Art zu schaffen, die im unverpressten Zustand eine gewollte Leckage bieten und die anschließend auf zuverlässige Weise durch Verpressen abgedichtet werden kann.

Diese Aufgabe wird mit einem Fitting oder Armatur mit den Merkmalen des Anspruches 1 gelöst. Erfindungsgemäß ist an dem Wulst mindestens ein schräg zu einer Ebene in Längsrichtung des Endabschnittes erstreckender Strömungskanal vorgesehen. Diese schräge Anordnung des Strömungskanals bedeutet eine Verlängerung des Strömungskanals entlang des Wulstes mit dem Dichtungsring, so dass auch der zu verpressende Bereich des Strömungskanals verlängert wird. Durch die längere Verpressstrecke wird dabei die Zuverlässigkeit der Abdichtung beim Verpressen erhöht, da der Strömungskanal an verschiedenen Stellen über seine Länge verpresst und abgedichtet werden kann. Der Strömungskanal kann dabei einen geringen Querschnitt besitzen, um die Materialbeanspruchung beim Verpressen gering zu halten und eine Rißbildung zu vermeiden.

Gemäß einer vorteilhaften Ausgestaltung der Erfindung ist der Strömungskanal in Draufsicht in einem Winkel von mindestens 10°, vorzugsweise mehr als 20° zur Längsrichtung des Endabschnittes angeordnet. Längsrichtung des Endabschnittes bedeutet dabei bei einer rohrförmigen Ausbildung des Endabschnittes die Strömungsrichtung, wobei sich der Strömungskanal dann auf der Innenseite des Endabschnittes erstreckt und sich der Winkel in einer geschnittenen Draufsicht messen lässt. Der Strömungskanal kann dabei einheitlich in einem Winkel zur Längsrichtung ausgebildet sein oder ein oder mehrere Krümmungen aufweisen, so dass der Winkel als Durchschnittswert betrachtet werden müsste. Wenn der Endabschnitt rohrförmig ausgebildet ist erstreckt sich der Strömungskanal in einer Ebene senkrecht zur Längsrichtung gesehen vorzugsweise um mindestens ein Zehntel des Umfanges des Endabschnittes. Dadurch wird gewährleistet, dass zumindest ein Teil des Strömungskanals in einem Bereich angeordnet ist, der nicht in dem Spalt zwischen zwei Pressbacken eines Presswerkzeuges vorgesehen ist.

Vorzugsweise ist die Länge des Strömungskanals größer, vorzugsweise mindestens fünfmal so groß, wie die Breite des Strömungskanals.

Gemäß einer weiteren Ausgestaltung erstreckt sich der Strömungskanal gewindeartig in Längsrichtung von einer Seite des Wulstes zu der anderen Seite des Wulstes erstreckt. Dadurch wird der Strömungskanal extrem verlängert und muss im Bereich des Dichtungsringes nur an einer beliebigen Stelle durch Verpressung abgedichtet werden, um die so hergestellte Verbindungsanordnung dauerhaft dicht zu machen.

Der Strömungskanal kann durch eine plastische Vertiefung im Bereich des Wulstes gebildet sein. Diese Vertiefung kann sowohl durch eine Prägung als auch durch eine Verminderung der Wandstärke gebildet werden.

Vorzugsweise ist der Strömungskanal im Querschnitt im wesentlichen halbkreisförmig oder halboval zur Innenseite des Endabschnittes hin offen ausgebildet. Die Höhe des Strömungskanals, also der Abstand zwischen dem Endabschnitt und dem Dichtungsring ist dabei relativ gering bemessen, um schon mit einer kleinen Verformung eine Abdichtung zu erhalten und um die Materialbeanspruchung im Bereich des Strömungskanals beim Verpressen gering zu halten. Dabei kann der Strömungskanal am Übergang zum Wulst oder zum Endabschnitt gerundet ausgebildet sein, so dass auch keine scharfe Kanten gebildet sind, die den Dichtungsring beschädigen könnten.

Nach der Erfindung wird auch eine Verbindungsanordnung zwischen einem solchen Fitting oder einer solchen Armatur und einem rohrförmigen Bauteil bereitgestellt. Die Verbindungsanordnung kann dabei auf dem Gebiet der Sanitärinstallation oder beim Verlegen sonstigen Leitungen und Rohre eingesetzt werden.

Die Erfindung wird nachfolgend anhand von zwei Ausführungsbeispielen mit Bezug auf die beigefügten Zeichnungen näher erläutert. Es zeigen:
- Fig. 1A: eine perspektivische Schnittansicht entlang eines Strömungskanals eines ersten Ausführungsbeispieles eines erfindungsgemäßen Fittings oder Armatur in einer Verbindungsanordnung im unverpresstem Zustand;
- Fig. 1B: eine Schnittansicht der Verbindungsanordnung der Fig. 1A;
- Fig. 1C: eine Schnittansicht des Fittings der Fig. 1A;
- Fig. 2A: eine Schnittansicht eines Fittings nach einem zweiten erfindungsgemäßen Ausführungsbeispiel;
- Fig. 2B: eine Schnittansicht des Fittings der Fig. 2A mit eingelegtem Dichtungsring, und
- Fig. 2C: eine Schnittansicht einer Verbindungsanordnung mit einem Fitting nach der Fig. 2A im unverpressten Zustand.

Ein Fitting oder eine Armatur 1 aus Metall, vorzugsweise Kupfer, Rotguss, Niro oder Stahl, umfasst einen verpressbaren Endabschnitt 2. An dem Endabschnitt 2 ist ein ringförmiger Wulst 3 ausgebildet, an den sich ein Außenabschnitt 4 anschließt. Der Außenabschnitt 4 dient zur anfänglichen Führung eines Rohres 6, das in das rohrförmige Bauteil 1 eingeführt wird. Das Rohr 6 wird bis zu einem Anschlag 5 eingeführt, der hier als konische Verjüngung ausgebildet ist.

In dem ringförmigen Wulst 3 liegt ein Dichtungsring 7 an, der mit geringem Spiel oder leichtem Preßsitz in dem Wulst 3 bzw. an dem Rohr 6 anliegt. In dem Wulst 3 ist eine Strömungskanal 8 ausgebildet, so dass zwischen dem Dichtungsring 7 und der Wand des Strömungskanals 8 im unverpressten Zustand ein Abstand für die Durchleitung eines Fluides besteht. Da das Rohr 6 mit geringem Spiel in den Endabschnitt 2 und den Außenabschnitt 4 des Fittings oder Armatur 1 eingeschoben ist bildet sich ein geringer Spalt 10 zwischen dem Endabschnitt 2 bzw. dem Außenabschnitt 4 und dem Rohr 6 aus, so dass ein flüssiges Fluid, Luft oder Gas von dem rohrförmigen Bauteil bzw. Rohr 6 über den Spalt 10 in den Strömungskanal 8 und von dort nach außen gelangen kann. Sollte daher das Verpressen nach dem Ineinanderstecken des Rohres 6 in den Fitting 1 vergessen werden, wird dies nach Befüllung des Leitungssystems mit einem flüssigen Fluid, Luft oder Gas umgehend bemerkt werden.

Der Strömungskanal 8 ist im Querschnitt oval gerundet zum Dichtungsring 7 hin offen ausgebildet. Der Übergang zwischen der Wand des Außenabschnittes 4, dem Wulst 3 oder dem Endabschnitt 2 und dem Strömungskanal 8 ist vorzugsweise gerundet ausgebildet, um beim Verpressen die Materialbeanspruchung durch die Deformierung am Strömungskanal 8 gering zu halten.

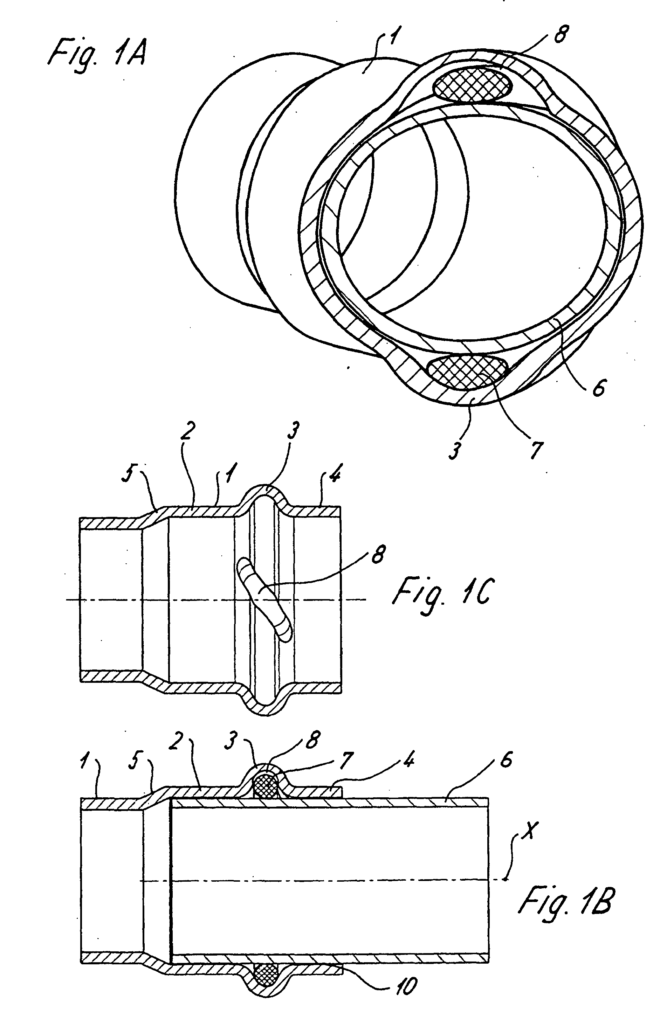

Der Strömungskanal 8 ist schräg zur Längsrichtung des Fittings 1 ausgebildet, wobei die Längsrichtung in Strömungsrichtung parallel zur Längsachse X verläuft. Der Strömungskanal 8 erstreckt sich innen am Umfang des Endabschnittes 2 in Draufsicht geradlinig in einem Winkel von vorzugsweise etwa 30° zur Längsrichtung (Fig. 1C). Auch andere Winkel sowie gekrümmte Formen von Strömungskanälen 8 können verwendet werden.

Der Strömungskanal 8 kann nach außen sichtbar hervorstehen oder nur durch eine Verdünnung der Wandstärke vorgesehen sein. Durch das Verpressen mit einem Presswerkzeug wird der Strömungskanal 8 nach innen gedrückt, so dass der durch den Strömungskanal 8 gebildete Spalt mit Material der Wand bzw. des Dichtungsringes 7 gefüllt wird und eine abgedichtete Verbindung zwischen dem rohrförmigen Bauteil 1 und dem Rohr 6 hergestellt wird. Zusätzlich wird beim Verpressen der Dichtungsring 7 fest an das Rohr 6 angedrückt. Aufgrund der Irreversibilität des Pressvorgangs ist die hergestellte Pressverbindung auch bei hohen Drücken dicht. Das Verpressen erfolgt auf den Wulst 3 und optional auf einer oder beiden Seiten des Wulstes 3, um durch das Verpressen eine formschlüssige Verdrehsicherung bereitzustellen. Das Verpressen kann so erfolgen, wie dies in dem deutschen Patent DE 100 07 914 C 1 beschrieben ist.

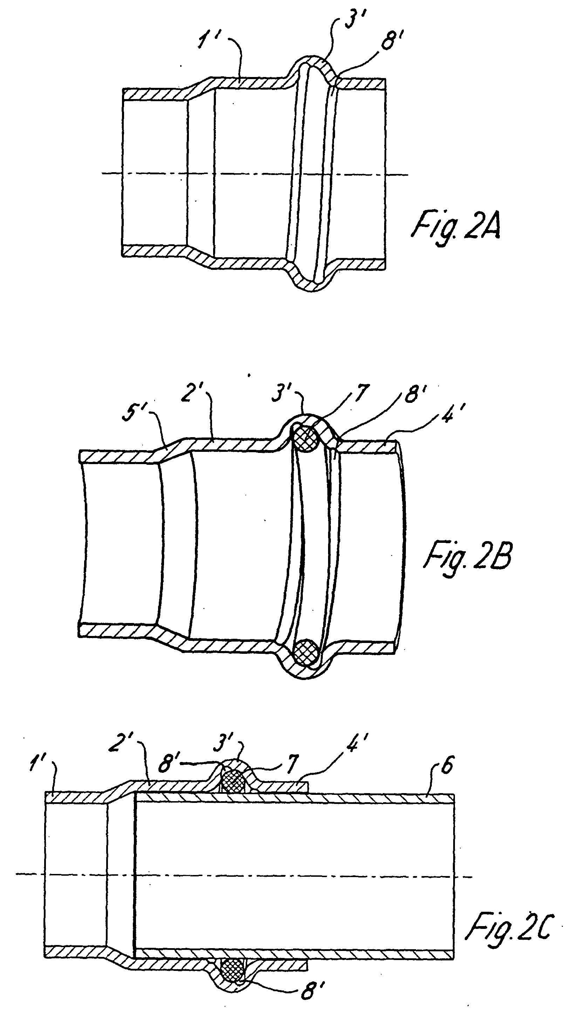

In den Fig. 2A bis 2C ist ein zweites Ausführungsbeispiel eines erfindungsgemäßen Fittings 1' dargestellt. An einem dünnwandigen Endabschnitt 2' des Fittings 1' ist ein ringförmiger Wulst 3' ausgebildet, in dem ein Dichtungsring 7 aufgenommen ist. Im Bereich des Wulstes 3' ist ein gewindeartiger Strömungskanal 8' gebildet. Durch diese extrem schräge Anordnung des Strömungskanals 8' relativ zur Längsrichtung des Endabschnittes 2' erstreckt sich der Strömungskanal 8' im Bereich des Wulstes vorzugsweise etwa einmal um den gesamten inneren Umfang des Endabschnittes 2'. Das dichte Verpressen nur an einer Stelle des Strömungskanals 8' sorgt schon für eine dichte Verbindungsanordnung.

In den dargestellten Ausführungsbeispielen wurde nur ein Strömungskanal 8, 8' in dem Fitting 1, 1' vorgesehen. Es ist auch möglich, zwei oder mehr Strömungskanäle 8, 8' an dem Wulst 3 auszubilden. Der Querschnitt des Strömungskanals 8, 8' kann ferner statt der teilovalen offenen Ausbildung eine andere Form, beispielsweise halbkreisförmig oder beliebig gerundet, aufweisen.

Gemäß einem weiteren möglichen Ausführungsbeispiel ist ein ringförmiger Wulst an einem Innenrohr ausgebildet, auf das ein rohrförmiges Bauteil aufgesteckt wird. Dabei ist an dem Innenrohr mindestens ein Strömungskanal zur Erzeugung einer undichten Stelle vorgesehen.

## Patentansprüche

1. Fitting oder Armatur (1, 1'), insbesondere zum Verbinden mit einem rohrförmigen Bauteil (6), mit einem sich in einer Längsrichtung erstreckenden Endabschnitt (2, 2'), der zum Herstellen einer Verbindung verpressbar ist und einen ringförmigen Wulst (3, 3') aufweist, in dem ein Dichtungsring (7) angeordnet ist, **dadurch gekennzeichnet, dass** an dem Wulst (3, 3') mindestens ein sich schräg zu einer Ebene in Längsrichtung des Endabschnittes (2, 2') erstreckender Strömungskanal (8, 8') vorgesehen ist.

2. Fitting oder Armatur nach Anspruch 1, **dadurch gekennzeichnet, dass** der Strömungskanal (8, 8') in Draufsicht in einem Winkel von mindestens 10°, vorzugsweise mindestens 20°, zur Längsrichtung des Endabschnittes (2, 2') angeordnet ist.

3. Fitting oder Armatur nach Anspruch 1 oder 2, **dadurch gekennzeichnet, dass** die Länge des Strömungskanals (8, 8') größer, vorzugsweise mindestens fünfmal so groß, wie die Breite des Strömungskanals (8, 8') ist.

4. Fitting oder Armatur nach einem der Ansprüche 1 bis 3, **dadurch gekennzeichnet, dass** der Endabschnitt (2, 2') rohrförmig ausgebildet ist und sich der Strömungskanal (8, 8') in einer Ebene senkrecht zur Längsrichtung gesehen um mindestens ein Zehntel des Umfanges des Endabschnittes (2, 2') erstreckt.

5. Fitting oder Armatur nach einem der Ansprüche 1 bis 4, **dadurch gekennzeichnet, dass** der Strömungskanal (8') sich gewindeartig in Längsrichtung von einer Seite des Wulstes (3') zu der anderen Seite des Wulstes (3') erstreckt.

6. Fitting oder Armatur nach einem der vorhergehenden Ansprüche 1 bis 5, **dadurch gekennzeichnet, dass** der Strömungskanal (8, 8') durch eine plastische Vertiefung im Bereich des Wulstes (3, 3') gebildet ist.

7. Fitting oder Armatur nach einem der vorhergehenden Ansprüche 1 bis 6, **dadurch gekennzeichnet, dass** der Strömungskanal (8, 8') im Querschnitt im wesentlichen halbkreisförmig oder halboval zur Innenseite des Endabschnittes (2, 2') hin offen ausgebildet ist.

8. Fitting oder Armatur nach einem der vorhergehenden Ansprüche 1 bis 7, **dadurch gekennzeichnet, dass** der Strömungskanal (8, 8') am Übergang zum Wulst (3, 3') oder zum Endabschnitt (2, 2') gerundet ausgebildet ist.

9. Verbindungsanordnung zwischen einem Fitting oder Armatur und einem rohrförmigen Bauteil (1, 6; 1', 6'), die über einen Dichtungsring (7) abgedichtet aneinander gehalten sind, **dadurch gekennzeichnet, dass** das Fitting oder die Armatur (1, 6; 1', 6') nach einem der vorhergehenden Ansprüche ausgestaltet ist.

## Claims

1. Fitting (1, 1'), in particular for connecting to a tubular component (6), having an end section (2, 2') which extends in a longitudinal direction, can be crimped in order to produce a connection and has an annular bead (3, 3'), in which a sealing ring (7) is arranged, **characterized in that** at least one flow passage (8, 8') extending obliquely to a plane in the longitudinal direction of the end section (2, 2') is provided on the bead (3, 3').

2. Fitting according to Claim 1, **characterized in that** the flow passage (8, 8'), in plan view, is arranged at an angle of at least 10°, preferably at least 20°, to the longitudinal direction of the end section (2, 2').

3. Fitting according to Claim 1 or 2, **characterized in that** the length of the flow passage (8, 8') is larger than, preferably at least five times as large as, the width of the flow passage (8, 8').

4. Fitting according to one of Claims 1 to 3, **characterized in that** the end section (2, 2') is of tubular design, and the flow passage (8, 8'), as viewed in a plane perpendicular to the longitudinal direction, extends around at least one tenth of the circumference of the end section (2, 2').

5. Fitting according to one of Claims 1 to 4, **characterized in that** the flow passage (8') extends in a screw-thread-like manner in the longitudinal direction from one side of the bead (3') to the other side of the bead (3').

6. Fitting according to one of the preceding Claims 1 to 5, **characterized in that** the flow passage (8, 8') is formed by a plastic recess in the region of the bead (3, 3').

7. Fitting according to one of the preceding Claims 1 to 6, **characterized in that** the flow passage (8, 8'), in cross section, is designed to be open essentially in a semicircular or semi-oval manner towards the inside of the end section (2, 2').

8. Fitting according to one of the preceding Claims 1 to 7, **characterized in that** the flow passage (8, 8') is of rounded design at the transition to the bead (3, 3') or to the end section (2, 2').

9. Connecting arrangement between a fitting and a tubular component (1, 6; 1', 6') which are held against one another in a sealed-off manner via a sealing ring (7), **characterized in that** the fitting (1, 1') is designed according to one of the preceding claims.

## Revendications

1. Raccord ou accessoire de tuyauterie (1, 1'), en particulier pour la liaison avec un composant (6) de forme tubulaire, comprenant un tronçon terminal (2, 2') s'étendant dans une direction longitudinale, qui peut être serti pour réaliser une liaison, ainsi qu'un bourrelet (3, 3') de forme annulaire dans lequel est disposée une bague d'étanchéité (7), **caractérisé en ce que** sur le bourrelet (3, 3') est prévu au moins un canal d'écoulement (8, 8') s'étendant obliquement par rapport à un plan dans la direction longitudinale du tronçon terminal (2, 2').

2. Raccord ou accessoire de tuyauterie selon la revendication 1, **caractérisé en ce que** le canal d'écoulement (8, 8'), vu de dessus, est disposé suivant un angle d'au moins 10°, de préférence d'au moins 20°, par rapport à la direction longitudinale du tronçon terminal (2, 2').

3. Raccord ou accessoire de tuyauterie selon la revendication 1 ou 2, **caractérisé en ce que** la longueur du canal d'écoulement (8, 8') est supérieure à la largeur du canal d'écoulement (8, 8'), de préférence d'au moins cinq fois.

4. Raccord ou accessoire de tuyauterie selon l'une des revendications 1 à 3, **caractérisé en ce que** le tronçon terminal (2, 2') est réalisé en forme tubulaire et le canal d'écoulement (8, 8'), vu dans un plan perpendiculaire à la direction longitudinale, s'étend sur au moins un dixième de la circonférence du tronçon terminal (2, 2').

5. Raccord ou accessoire de tuyauterie selon l'une des revendications 1 à 4, **caractérisé en ce que** le canal d'écoulement (8, 8') s'étend à la manière d'un filet dans la direction longitudinale d'un côté du bourrelet (3') à l'autre côté du bourrelet (3').

6. Raccord ou accessoire de tuyauterie selon l'une des revendications 1 à 5 précédentes, **caractérisé en ce que** le canal d'écoulement (8, 8') est formé par un renfoncement plastique dans la zone du bourrelet (3, 3').

7. Raccord ou accessoire de tuyauterie selon l'une des revendications 1 à 6 précédentes, **caractérisé en ce que** la section transversale du canal d'écoulement (8, 8') est réalisée sensiblement en forme de demi-cercle ou de demi-ovale, ouverte vers le côté intérieur du tronçon terminal (2, 2').

8. Raccord ou accessoire de tuyauterie selon l'une des revendications 1 à 7 précédentes, **caractérisé en ce que** le canal d'écoulement (8, 8') est réalisé arrondi au droit de la transition avec le bourrelet (3, 3') ou du tronçon terminal (2, 2').

9. Dispositif de liaison entre un raccord ou un accessoire de tuyauterie et un composant de forme tubulaire (1, 6 ; 1', 6') qui sont maintenus l'un contre l'autre, de manière étanche, par une bague d'étanchéité (7), **caractérisé en ce que** le raccord ou l'accessoire de tuyauterie (1, 6 ; 1', 6') est conçu selon l'une des revendications précédentes.
